Europäisches Patentamt

European Patent Office

Office européen des brevets

(11) Veröffentlichungsnummer : **0 347 417 B1**

# EUROPÄISCHE PATENTSCHRIFT

(45) Veröffentlichungstag der Patentschrift:
20.03.91 Patentblatt 91/12

(51) Int. Cl.$^5$ : **A61C 13/00, B23H 3/04**

(21) Anmeldenummer : 88901839.6

(22) Anmeldetag : 27.02.88

(86) Internationale Anmeldenummer :
PCT/EP88/00145

(87) Internationale Veröffentlichungsnummer :
WO 88/06429 07.09.88 Gazette 88/20

(54) VERFAHREN ZUR HERSTELLUNG VON FORMEN FÜR DIE HERSTELLUNG VON ZAHNERSATZTEILEN.

(30) Priorität : 03.03.87 DE 3706769

(43) Veröffentlichungstag der Anmeldung :
27.12.89 Patentblatt 89/52

(45) Bekanntmachung des Hinweises auf die
Patenterteilung :
20.03.91 Patentblatt 91/12

(84) Benannte Vertragsstaaten :
AT CH DE FR GB IT LI

(56) Entgegenhaltungen :
EP-A- 0 064 601
FR-A- 2 344 651

(73) Patentinhaber : Krupp Medizintechnik GmbH
Harkortstr. 65
W-4300 Essen 1 (DE)

(72) Erfinder : WALTER, Herbert
Jockelsberg 4
W-7239 Fluorn-Winzeln (DE)
Erfinder : KÖRBER, Erich
Osianderstra e 2-8
W-7400 Tübingen (DE)
Erfinder : GENTISCHER, Josef
Weibergweg 31
W-7064 Remshalden (DE)

(74) Vertreter : Vomberg, Friedhelm, Dipl.-Phys.
Schulstrasse 8
W-5650 Solingen 1 (DE)

EP 0 347 417 B1

**Beschreibung**

Die Erfindung betrifft ein Verfahren zur Herstellung von Formen für die Herstellung von Zahnersatzteilen.

Bei einem Verfahren zur Herstellung von Zahnersatzteilen durch Funkenerosion in einer Erodiermaschine gemäß EP-A-0225 513, welche einen Stand der Technik gemäß Art. 54 (3) (4) EPÜ darstellt, werden die Formen durch Formelektroden gebildet, die ihrerseits ebenfalls durch Funkenerosion hergestellt werden. Ausgangsform ist ein Modell des Zahnersatzteils aus elektrisch leitfähigem Material oder ein Modell, das mit einer Schicht aus elektrisch leitfähigem Material überzogen ist. Es ist dabei schwierig, die beiden Formelektroden so herzustellen, daß sie sich zum Zahnersatzteil ergänzen, und in der Erodiermaschine auch zueinander entsprechend exakt positioniert werden können.

Aus der FR-A- 23 44 651 ist ein Verfahren zur Herstellung einer Formmaske aus Kupfer für ein Elektroerosionswerkzeug bekannt, bei dem die Formmaske der Muttermatrize entsprechen soll. Dabei wird die Muttermatrize selbst als Former verwendet. Auf sie wird galvanisch eine leitende dünne Überzugsschicht aufgebracht, auf der anschließend die Metallschicht für die Formmaske aufgebaut wird. Dieses Verfahren ermöglicht es zwar, die Formmaske direkt aus einer Muttermatrize ohne die Notwendigkeit der Herstellung eines der Muttermatrize nachgebildeten Hilfselementes herzustellen. Als Anwendungsbeispiel dieses Verfahrens wird das Herstellen von Spritzgießformen für im Präzisionsspritzguß herzustellende Bauteile der Feinwerktechnik angegeben, bei denen die sogenannte Orginal-Muttermatrize, z.B. durch Gravieren einer Stahlplatte hergestellt wird. Dieses Verfahren gibt aber noch keine Hinweise darauf, zwei Formelektroden, von denen die Innenseite der einen dem Modell eines Zahnersatzteiles und die Innenseite der anderen dem Abdruck eines Zahnstumpfes nachgebildet ist, einfach so herzustellen, daß sie sich exakt zu einem Zahnersatzteil ergänzen.

Aufgabe der Erfindung ist es daher, ein einfaches und kostengünstiges Verfahren zur Herstellung von Formelektroden für die Herstellung von Zahnersatzteilen durch Funkenerosion zu schaffen. Zwei Formelektroden stellen gleichzeitig eine metallische Form für das Zahnersatzteil dar, die auch bei entsprechender apparativer Anpassung für das Kunststoffspritzen oder Pressformen keramischer Werkstoffe von Zahnersatzteilen verwendet werden können. Daher ist die Aufgabe der Erfindung weitergehend dahin zu verstehen, ein einfaches und kostengünstiges Verfahren zur Herstellung von Formen für Zahnersatzteile zu schaffen.

Erfindungsgemäß wird diese Aufgabe dadurch gelöst, daß ein Modell des Zannersatzteils mit einer ersten Schicht aus elektrisch leitendem Material überzogen und entlang einer Umfangslinie mit einer senkrecht abstehenden Trennmembran aus elektrisch nicht leitendem Material versehen wird, und daß dann in einem Galvanikbad eine weitere Schicht aus elektrisch leiteindem Material aufgebracht wird, so daß die beiden bei der Ausformung des Modells durch die Trennmembran trennbaren Hälften dieser weiteren Schicht die Formelektroden bilden, die in eine Erodiermaschine zur Bildung eines Zahnersatzteils einsetzbar sind.

Die Verwendung einer Trennmembran aus elektrisch nicht leitendem Material beim galvanischen Überziehen des Wachsmodells macht es möglich, die galvanische aufgebrachte Schicht (Galvanoform) zweiteilig zu erhalten, wobei die beiden Teile als Formen für die Herstellung von Zahnersatzteilen durch Gießen, Spritzen oder Pressen bzw. als Formelektroden für die Herstellung des Zahnersatzteils in einer Erodiermaschine eingesetzt werden können. Dabei läßt sich die axiale Zuordnung der beiden Formelektroden in der Erodiermaschine mit einfachen Mitteln gewährleisten. Außerdem ist in einfacher Weise sichergestellt, daß sich die beiden Formelektroden exakt an ihren Grenzflächen zur Vollform ergänzen, nämlich an der Fläche, an der am Wachsmodell die Trennmembran angeordnet ist.

Ein Ausführungsbeispiel der Erfindung wird im folgenden unter Bezugnahme auf die beigefügten Zeichnung näher beschrieben. Es stellen dar :

Figur 1 ein Wachsmodell mit aufgetragener elektrisch leitender ersten Schicht und einer Trennmembran ;

Figur 2 das Einbringen der Einheit nach Fig. 1 in ein Galvanikbad ;

Figur 3 die Einheit nach Fig. 1 nach dem Überziehen mit einer weiteren Schicht im Galvanikbad ;

Figur 4 die Anordnung des Modells mit Trennmembran und den aufgebrachten Schichten in einer Erodiermaschine vor dem Ausformen ;

Figur 5 die Verwendung der durch das Ausformen gebildeten Formelektroden zur Herstellung eines Zahnersatzteils in einer Erodiermaschine ;

Figur 6 eine Modifikation von Fig. 1.

Man stellt zunächst ein positives Wachsmodell 1 des Zahnersatzteiles her. Dieses Zahnersatzteil 1 wird dann z.B. durch Aufsprühen mit einer elektrisch leitenden Schicht (2), z.B. aus Silber, überzogen.

Man bringt dann entlang einer Umfangslinie 17 etwa in Gegend des Äquators des Wachsmodells 1 eine Trennmembran 3 an. Die Umfangslinie 17 soll also möglichst so liegen, daß sie in der Ebene des größten Querschnitts durch das Wachsmodell 1 liegt. Die Trennmembran 3 ist mit der Schicht 2 verklebt. Die Trennmembran 3 muß aus elektrisch isolierendem Material hergestellt sein ; das Material muß ferner die Eigenschaft haben, von galvanischen Bädern nicht angegriffen zu werden. Ein für diese Zwecke geeignetes Material ist Silikon. Bei einem Ausführungsbeispiel war die Dicke d in der Trennmembran 0,5 mm ; die Höhe h betrug ca. 3 mm. Mit dieser Höhe steht die Trennmembran 3 etwa senkrecht von der Oberfläche des Wachsmodells 1 ab.

Als nächster Verfahrensschritt wird die durch Wachsmodell 1, der Schicht 2 und der Trennmembran 3 gebildete Einheit 19 von einer Halteklammer 8 umfaßt. Die Halteklammer 8 besteht aus 2 Teilen 8', 8", die über Bügel 8a miteinander verbunden sind. Die Halteklammer 8 umgibt das Wachsmodell 1 im wesentlichen zu beiden Seiten der Trennmembran 3 derart, daß je ein Teil 8', 8" beidseitig der Trennmembran 3 angeordnet ist.

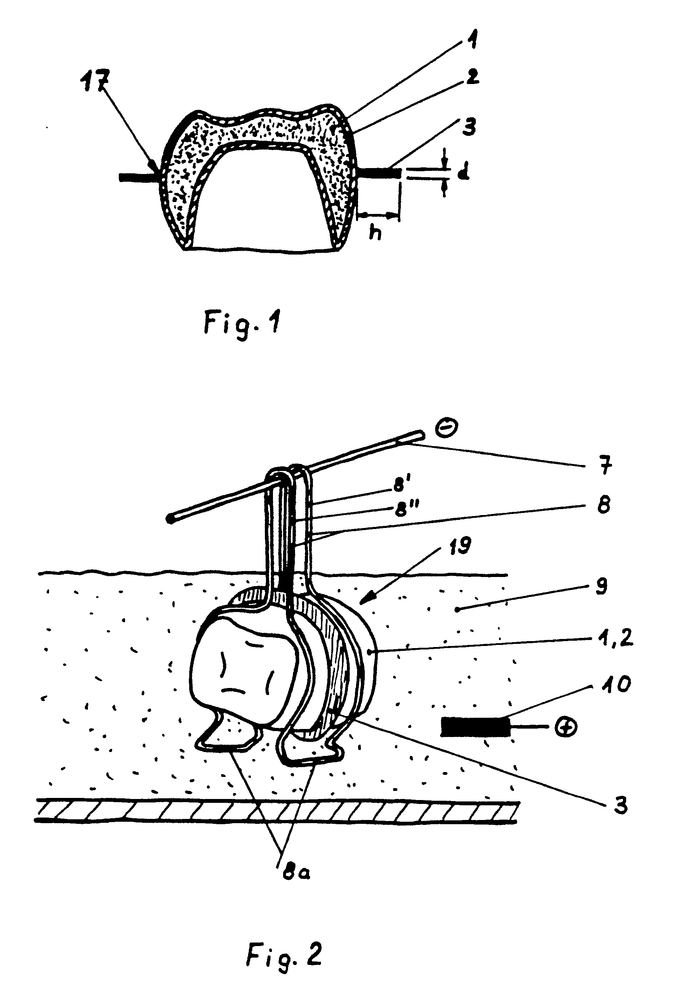

Die von der Halteklammer 8 umfaßte Einheit 19 wird in ein Galvanikbad 9 (Fig. 2) eingehängt. Die Halteklammer 8, die aus Metall ist, dient dabei zum Anschluß der Kathode 7 an die Schicht 2 beidseits der Trennmembran 3. Die Anode 10 ist im Bad separat vorgesehen. Sie besteht aus einem Material, z.B. Kupfer, das sich bei Stromfluß von der Anode 10 ablöst und sich dann auf der elektrisch leitenden Schicht 2 dann ablagert.

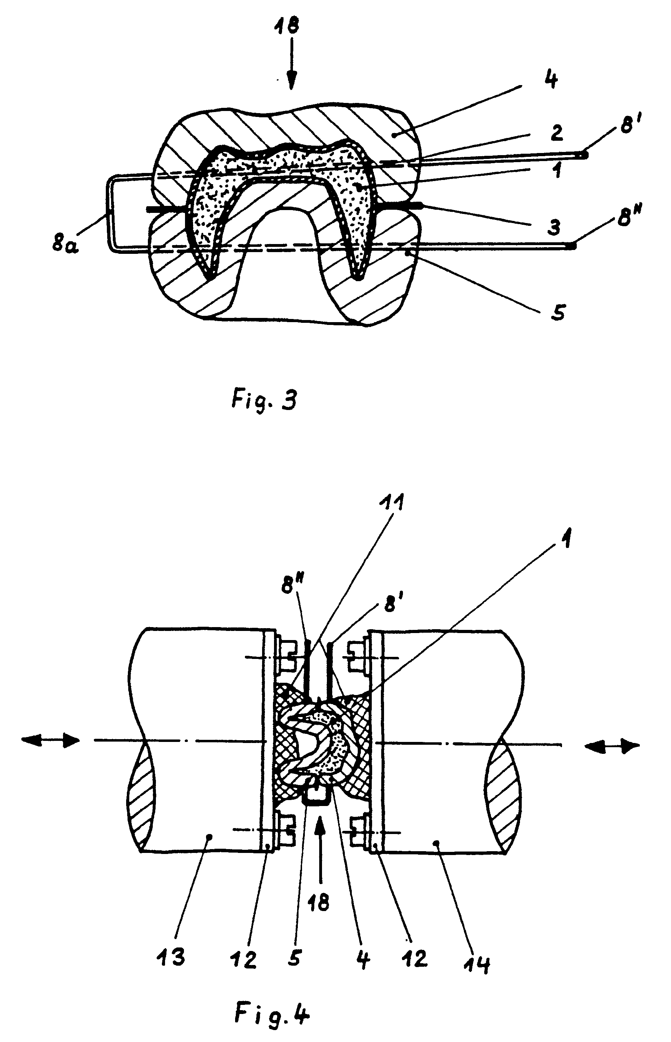

Auf diese Weise wird auf das Wachsmodell 1 bzw. auf die Schicht 2 galvanisch eine weitere Schicht aus Kupfer aufgetragen, die mindestens 1 mm stark ist. Diese Schicht wird durch die beiden Hälften 4, 5 gebildet, die durch die Trennmembran 3 voneinander getrennt sind (vgl. Fig. 3). Die Halteklammer 8 ist in diese Schicht 4, 5 mit einbezogen. Nach dem Abnehmen von der Kathode 7 und dem Durchtrennen des Bügels 8a dienen die Teile 8' und 8" als eingalvanisierte Kontaktstife.

Die Hälften 4, 5 der im Galvanikbad aufgetragenen Schicht bilden nach dem Ausformen des Wachsmodells 1 die Formelektroden zur Herstellung des Zahnersatzteils durch Funkenerosion.

Vor der Ausformung wird die in Fig. 3 dargestellte Einheit 18 aus Wachsmodell 1, Schicht 2 und Schicht 4, 5 gemäß Fig. 4 auf zwei Anschlußplatten 12, 12' mit Plastilin o.ä. festgeklebt. Die Anschlußplatten 12, 12' sind am linken Dorn 13 bzw. am rechten Dorn 14 einer zweiachsigen Erodiermaschine befestigt und werden soweit aufeinander zubewegt, daß die Einheit 18 gleichzeitig beidseits mit den Anschlußplatten 12, 12' verklebt werden kann.

Jetzt wird das Wachsmodell 1 ausgeformt. Dazu fährt man nach Erhärten des Klebstoffes 11 die beiden Dorne 13 und 14 auseinander. Dabei trennt sich die galvanisch aufgetragene weitere Schicht in die beiden Hälften 4, 5, und zwar an der Stelle, an der sich am Wachsmodell 1 die Trennmembran 3 befindet. Dieses exakte Trennen ist durch die Trennmembran 3 möglich, da sie, weil sie aus nicht elektrisch leitendem Material ist, am Galvanisierungsprozeß nicht teilgenommen hat. Jetzt kann das Wachsmodell 1 entnommen werden. Die beiden Hälften 4, 5 der galvanisch erzeugten Schicht bilden die Formelektroden der Erodiermaschine bei der nachfolgenden Herstellung eines Zahnersatzteils 20 aus einem Block 15 aus Vollmaterial. Die Hälften (oder Formelektroden) 4, 5 sind bereits beim Ausformen in der Erodiermaschine zueinander ausgerichtet und ergänzen sich exakt zur gewünschten Form. Die Stromzuführung zu den beiden Hälften erfolgt über die Teile 8', 8" der Halteklammer 8.

Als nächstes erfolgt dann dadurch, daß die beiden Dorne 13, 14 in der Funkenerodiermaschine aufeinander zu bewegt werden, die Funkenerosion des Zahnersatzteils 20. Die beiden Dorne 13, 14 werden dabei soweit aufeinander zu bewegt, bis sie exakt wiederum die Stellung einnehmen, die sie bei noch nicht getrennten Hälften 4, 5 der Schicht in Fig. 4 zueinander hatten. Diese exakte Position wird mittels Meßuhr festgestellt und in dieser Position dann bei einem bestimmten Stand der Meßuhr ein Mikroschalter ausgelöst, der die Aufeinanderzubewegung der beiden Dorne anhält. In dieser Situation ist dann das funkenerodierte Zahnersatzteil 20 fertig.

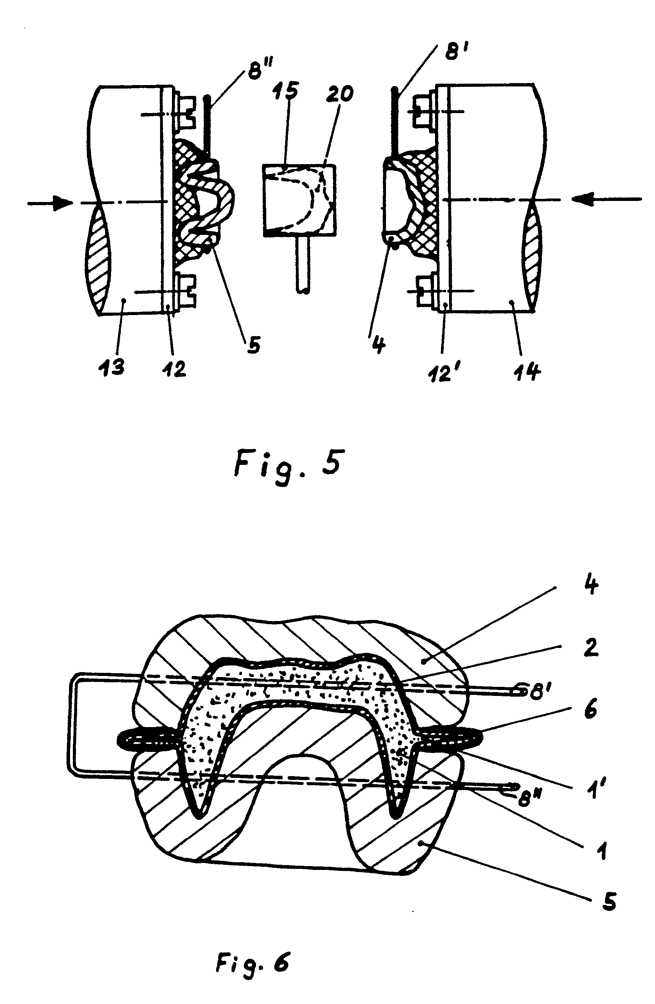

Figur 6 zeigt eine Abwandlung des Ausführungbeispiels des Verfahrens. In Fig. 6 wird bereits an das Wachsmodell 1 aus demselben Material ein Trennring 1' angeformt, der nach dem Aufsprühen der Schicht 2 mit einer weiteren elektrischen nicht leitenden Schicht 6 überzogen wird, so daß er dann im weiteren Verfahren dieselbe Funktion wie die Trennmembran 3 ausübt.

## Ansprüche

1. Verfahren zur Herstellung der Formen für die Herstellung von Zahnersatzteilen (20) bei dem ein Modell (1) des Zahnersätzteils (20) mit einer ersten Schicht (2) aus elektrisch leitendem Material überzogen und entlang einer Umfangslinie (17) mit einer senkrecht abstehenden Trennmembran (3, 6) aus elektrisch nicht leitendem Material versehen wird, und bei dem dann in einem Galvanikbad (9) eine weitere Schicht aus elektrisch leitendem Material aufgebracht wird, so daß die beiden bei der Ausformung des Modells durch die Trennmembran (3) trennbaren Hälften (4, 5) dieser weiteren Schicht die Formen bilden.

2. Verfahren nach Anspruch 1, dadurch gekennzeichnet, daß als Modell des Zahnersatzteils (20) ein Wachsmodell (1) eingesetzt wird.

3. Verfahren nach Anspruch 1, dadurch gekennzeichnet, daß die erste Schicht (2) aus Silber ist.

4. Verfahren nach Anspruch 1, dadurch gekennzeichnet, daß die genannte Umfangslinie (17) ungefähr der Lage der größten Querschnittsfläche des Modells (11) entspricht.

5. Verfahren nach Anspruch 1, dadurch gekennzeichnet, daß die Trennmembran (3) von der Oberfläche des Models (1) ca. 2-5 mm ungefähr senkrecht absteht.

6. Verfahren nach Anspruch 1 oder einem der folgenden, dadurch gekennzeichnet, daß die durch das Modell (1), die erste Schicht (2), die Trennmembran (3) und die weitere Schicht (4, 5) gebildete Einheit (18) an den einander gegenüber liegenden beiden Anschlußplatten (12, 12′) einer Presse, einer spritzgußmaschine oder einer Erodiermaschine befestigt wird und die Entformung des Modells (1) nach denn Auseinanderfahren der Anschlußplatten (12, 12′) erfolgt, derart daß nach dem Entfernen die Hälften (4, 5) der weiteren Schticht (4, 5) als Form oder Formelektroden an den Anschlußplatten (12, 12) verbleiben.

7. Verfafhren nach einem der Ansprüche 1 bis 6, dadurch gekennzeichnet, daß die getrennten Hälften (4, 5) der weiteren Schicht als Formelektroden in einer Erodiermaschine bei der Herstellung des Zahnersatzteils durch Funkenerosion eingesetzt werden.

8. Verfahren nach Anspruch 7, dadurch gekennzeichnet, daß zur Halterung der aus Modell (1), erster Schicht (2) und Trennmembran (3) gebildeten Einheit (19) im Galvanikbad (9) eine Halteklammer (8) verwendet wird, die die Einheit (19) beidseitig der Trennmembran (3) mit je einem Teil (8′, 8″) umfasst und die elektrische Verbindung der Schicht (2) zur Kathode (7) darstellt, und daß die Teile (8′,8″) der Halteklammer (8) nach dem Ausformen des Modells (1) und Trenen der durch die Hälften (4, 5) der im Galvanikbad (9) aufgebrachten weiteren Schicht die Kontaktanschlüsse der die Formelektroden bildenden Hälften bilden.

9. Verfahren nach Anspruch 1 oder einem der folgenden, dadurch gekennzeichnet, daß die Ausbildung der Tremmembran (6) derart erfolgt, daß das Modell (1) entlang der Umfangslinie (17) mit einem Kragen (1′) aus demselben Material versehen und daß der Kragen mit einer Schicht (6) aus elektrisch nicht leitendem Matertial überzogen wird.

**Claims**

1. A process for the production of the moulds for making tooth replacement parts (20), wherein a model (1) of the tooth replacement part (20) is coated with a first layer (2) of electrically conductive material and provided along a peripheral line (17) with a perpendicularly projecting separating membrane (3, 6) of electrically non-conductive material, a further layer of electrically conductive material being then so applied in a galvanic bath (9) that the two halves (4, 5) of said further layer which can be separated by the separating membrane (3) in the demoulding of the model form the moulds.

2. A process according to claim 1, characterized in that a wax model (1) is used as the model of the tooth replacement part (20).

3. A process according to claim 1, characterized in that the first layer (2) is of silver.

4. A process according to claim 1, characterized in that said peripheral line (17) substantially corresponds to the position of the maximum cross-sectional area of the model (1).

5. A process according to claim 1, characterized in that the separating membrane (3) projects perpendicularly by about 2-5 mm from the surface of the model (1).

6. A process according to claim 1 or one of the following claims, characterized in that the unit (18) formed by the model (1), the first layer (2), the separating membrane (3) and the further layer (4, 5) is attached to the two facing connection plates (12, 12′) of a press, an injection moulding machine or an eroding machine, and after the model (1) has been demoulded the connection plates (12, 12′) are so moved apart that after removal, the halves (4, 5) of the further layer (4, 5) are left on the connection plates (12, 12′) as a mould or mould electrodes.

7. A process according to one of claims 1 to 6, characterized in that the separated halves (4, 5) of the further layer are used as mould electrodes in an eroding machine for the production of the tooth replacement part by spark erosion.

8. A process according to claim 7, characterized in that for the retention of the unit (19) formed by the model (1), the first layer (2) and the separating membrane (3) in the galvanic bath (9) use is made of a retaining clamp (8) which engages via a part (8′, 8″) respectively around the unit (19) on both sides of the separating membrane (3) and forms the electric connection of the layer (2) to the cathode (7), and after the demoulding of the model (1) and the separation of the halves (4, 5) of the further layer applied in the galvanic bath (9), the parts (8′, 8″) of the retaining clamp (8) form the contact connections of the halves forming the mould electrodes.

9. A process according to claim 1 or one of the following claims, characterized in that the separating membrane (6) is so constructed that the model (1) is provided with a collar (1′) of the same material along the peripheral line (17), and the collar is coated with a layer (6) of electrically non-conductive material.

**Revendications**

1. Procédé de fabrication des moules utilisés pour la production d'éléments de remplacement de dents (20), dans le cas duquel un modèle (1) de l'élément de remplacement de la dent (20) est recouvert d'une première couche (2) constituée d'un matériau électroconducteur et est muni, le long d'une ligne périphérique (17), d'une membrane de séparation (3, 6) constituée d'un matériau non conducteur de l'électricité, et dans le cas duquel une autre couche en matériau électroconducteur est ensuite rapportée dans un bain galvanoplastique de telle façon que les deux moitiés (4, 5) de cette autre couche, séparables au moyen de la membrane de séparation (3) au moment du démoulage du modèle, constituent les moules.

2. Procédé suivant la revendication 1, caractérisé en ce que l'on se sert, comme modèle de l'élément de remplacement de la dent (20), d'un modèle en cire (1).

3. Procédé suivant la revendication 1, caractérisé en ce que la première couche (2) est en argent.

4. Procédé suivant la revendication 1, caractérisé en ce que la ligne périphérique (17) citée correspond sensiblement à la position de la plus grande surface de section du modèle (1).

5. Procédé suivant la revendication 1, caractérisé en ce que la membrane de séparation (3) est à une distance sensiblement perpendiculaire de la surface externe du modèle (1) d'environ 2 à 5 mm.

6. Procédé suivant la revendication 1 ou l'une quelconque des revendications suivantes, caractérisé en ce que l'ensemble (18), constitué par le modèle (1), la première couche (2), la membrane de séparation (3) et l'autre couche (4, 5), est fixé aux deux plaques d'assemblage (12, 12'), situées l'une en face de l'autre, d'une presse, d'une machine de moulage par injection ou d'une machine d'érosion, et en ce que le démoulage du modèle (1) s'effectue après avoir écarté les plaques d'assemblage (12, 12') de telle façon qu'après l'enlèvement, les moitiés (4, 5) de l'autre couche (4, 5) demeurent comme moule ou comme électrodes de moulage sur les plaques d'assemblage (12, 12').

7. Procédé suivant l'une quelconque des revendications 1 à 6, caractérisé en ce que les moitiés séparées (4, 5) de l'autre couche sont installées dans une machine à érosion pour la fabrication de l'élément de remplacement de dent par électro-érosion.

8. Procédé suivant la revendication 7, caractérisé en ce que, pour maintenir l'ensemble (19) constitué du modèle (1), de la première couche (2) et de la membrane de séparation (3), dans le bain galvanoplastique (9), on utilise une pince de fixation (8), qui saisit l'ensemble (19) des deux côtés de la membrane de séparation (3) avec chaque fois une pièce (8', 8") et qui réalise la liaison électrique de la couche (2) avec la cathode (7), et en ce que les pièces (8', 8") de la pince de fixation (8), après démoulage du modèle (1) et séparation au travers des moitiés (4, 5) de l'autre couche, déposée dans le bain galvanoplastique (9), forment les contacts de raccordement des moitiés constituant les électrodes de moulage.

9. Procédé suivant la revendication 1 ou l'une quelconque des revendications suivantes, caractérisé en ce que la membrane de séparation (6) est réalisée de telle façon que le modèle (1) est muni, le long de la ligne périphérique (17) d'une collerette (1') du même matériau et en ce que la collerette est recouverte d'une couche (6) en matériau non conducteur de

l'électricité.

Fig. 1

Fig. 2

Fig. 3

Fig. 4

Fig. 5

Fig. 6